# EUROPÄISCHE PATENTSCHRIFT

(11) **EP 1 778 379 B1**
(45) Veröffentlichungstag und Bekanntmachung des Hinweises auf die Patenterteilung: **24.10.2007**
(21) Anmeldenummer: 05766908.7
(22) Anmeldetag: 07.07.2005
(51) Int. Cl.: B01D 29/01, B01D 29/52, B01D 29/66, B01D 29/96, B29C 47/68

(54) **VORRICHTUNG UND VERFAHREN ZUM FILTRIEREN EINES FLUIDS, INSBESONDERE FÜR KUNSTSTOFFVERARBEITENDE ANLAGEN**
DEVICE AND METHOD FOR FILTERING A FLUID, IN PARTICULAR FOR PLASTICS PROCESSING PLANTS
DISPOSITIF ET PROCEDE DE FILTRATION D'UN FLUIDE DESTINES EN PARTICULIER A DES INSTALLATIONS DE TRANSFORMATION DES PLASTIQUES

(30) Priorität: 28.07.2004 DE 102004036597
(43) Veröffentlichungstag der Anmeldung: 02.05.2007
(73) Patentinhaber: Kreyenborg Verwaltungen und Beteiligungen GmbH & Co. KG, D-48157 Münster (DE)
(72) Erfinder: WÖSTMANN, Stefan, 48336 Sassenberg (DE); BUSSMANN, Dirk, 48165 Münster (DE)
(74) Vertreter: Habbel, Hans-Georg
(86) Internationale Anmeldenummer: PCT/DE2005/001201
(87) Internationale Veröffentlichungsnummer: WO 2006/012828

(56) Entgegenhaltungen:
- EP-A- 0 554 237
- WO-A-01/54793
- WO-A-98/47688
- DE-A1- 3 902 061

## Beschreibung

Die Erfindung bezieht sich auf eine Vorrichtung zum Filtrieren eines verflüssigten Kunststoffes mit einem Gehäuse, einem Zufuhr kanal, einem Abfuhrkanal und Rückspülkanälen, wobei im Strömungsweg der Kunststoffschmelze in zwei quer zur Strömungsrichtung verschieblich gelagerten Siebträgern wenigstens je ein Filterelement in einem entsprechenden Siebraum angeordnet und mit dem Zufuhrkanal und dem Abfuhrkanal in Verbindung bringbar sind sowie einem Verdrängerkolben, der, wenn der Siebträger in der Rückspülstellung steht, die Reinsiebseite mit gereinigter Kunststoffschmelze beaufschlagt gemäß dem Ober begriff des Anspruches 1.

Die Erfindung bezieht sich weiterhin auf ein Verfahren zum Filtrieren eines verflüssigten Kunststoffes gemäß dem Oberbegriff des Anspruches 10.

Aus der EP 0 554 237 A ist eine Filtriervorrichtung für verunreinigte Fluide und Verfahren zu ihrem Betrieb bekanntgeworden. Bei dieser bekannten Einrichtung ist an zumindest einem Abstromkanal zumindest ein Vorratsraum zur Aufnahme einer beim Rückspülvorgang benötigten Fluidmenge angeschlossen. In dem Vorratsraum ist ein Kolben zur Verdrängung von Fluid aus dem Vorratsraum geführt, wobei dieser Vorratsraum beim Rückspülvorgang sowohl mit der Abströmseite des rückzuspülenden Siebnestes als auch mit dem Abströmkanal in freier Fließverbindung für das gereinigte Fluid steht. Der Vorrats- oder Speicherraum wird während der normalen Produktion mit Kunststoffmaterial gefüllt und steht im Fall der Rückspülung nicht nur mit dem rückzuspülenden Siebnest in Verbindung, sondern der in dem Speicherraum geführte Verdrängerkolben wirkt auch auf den normalen Produktionskanal ein, der von dem dann in Betrieb befindlichen Sieb zum Arbeitsgerät oder Werkzeug führt. Hier tritt die Schwierigkeit auf, daß bei der Mündung des Speicherraumes in den Produktionskanal die aus dem Speicherraum auszudrückende Kunststoffmasse teilweise entgegen der Fließrichtung im Produktionskanal fließen muß, um das Sieb rückzuspülen. Ein Teil des aus dem Speicherraum ausgedrückten Kunststoffmaterials fließt aber auch in Richtung des Produktionskanales, d. h. in Richtung zum Werkzeug hin. Hier treten also Schwierigkeiten auf, die in der Praxis nur schwer zu beherrschen sind.

Die in dieser Literaturstelle angesprochene Druckkonstante ist nicht erreichbar, da es sich hier um kommunizierende Röhren, d.h. in Verbindung befindliche Druckräume handelt. Weiterhin ist der Widerstand zur Rückspülöffnung hin wesentlich geringer als zum Werkzeug hin, so daß am Werkzeug selbst ein erheblicher Druckabfall auftreten muß.

In der WO 98147688 wird eine Siebeinrichtung für viskose Massen, d.h. also verflüssigten Kunststoff, beschrieben, bei welcher ebenfalls ein Verdrängerkolben gereinigte Kunststoffmasse durch das Sieb zurückdrückt, um damit den Rückspülvorgang durchzuführen. Diese Anordnung hat den Nachteil, daß Ventileinrichtungen vorhanden sein müssen, die während der normalen Arbeitsweise, also während der Produktionsphase, den Rückflußkanal verschließen. Solche Ventileinrichtungen sind bei der Verarbeitung von fluidem, thermoplastischen Kunststoffmaterial unerwünscht, da sie zu Verstopfungen führen können und selbstverständlich zusätzlich beheizt sein müssen. Auch kann eine Zersetzung des Kunststoffmaterials in diesem Bereich erfolgen, da die Ventileinrichtung niemals ganz sauber gereinigt werden kann.

Diese bekannte Einrichtung hat weiterhin den Nachteil, daß zum Auswechseln der Siebe die gesamte Ventileinrichtung abgenommen werden muß, d. h. also die bekannte Vorrichtung ist relativ aufwendig gestaltet.

Aus dem DE 17 88 037 U1 ist eine Vorrichtung zum Trennen von Flüssigkeit und Feststoff enthaltenden Gemischen bekanntgeworden, bei dem die Feststoff enthaltene Flüssigkeit durch ein Sieb geführt wird, wobei gleichzeitig ein Speicherkolben zurückbewegt wird. An den Raum des Speicherkolbens schließt eine Abflußleitung an, durch die die gereinigte Flüssigkeit abgeführt wird. Die Verbindung zwischen dem Speicherkolben und der Abfuhrleitung ist mit einem Rückschlagventil ausgerüstet, das nuöffnet, wenn der Speicherkolben in der Abflußleitung einen entsprechenden Druck erzeugt. Gleichzeitig kann bei der Bewegung des Speicherkolbens die gereinigte Flüssigkeit auch wieder durch das Sieb gedrückt werden, um dieses von anlagernden Feststoffpartikeln zu reinigen. Eine solche Einrichtung ist für verflüssigten Kunststoff nicht einsetzbar, insbesondere weil in dem Abflußkanal das dort vorgesehene Rückschlagventil sehr schnell verstopfen und unbrauchbar würde, wobei außerdem im Raum zwischen Rückschlagventil und Speicherkolben Material stehen bleibt, das abbaut, d. h. auch hier sind Totzonen vorhanden, die unbedingt bei der Verarbeitung von flüssigem Kunststoff vermieden werden müssen.

Der Erfindung liegt die Aufgabe zugrunde, eine Vorrichtung und ein Verfahren zum Rückspüeln bei fluidem Kunststoffmaterial zu schaffen, welches ohne Störung des im Produktionskanal fließenden Werkstoffes Masseverluste im Hauptstrom zum Zeitpunkt des Rückspülens vermeidet und sicherstellt, daß sich im Bereich des Verdrängerkolbens kein Material ansammeln kann, das vercracken und daher zu Störungen beim Rückspülen führen kann.

Diese der Erfindung zugrundeliegende Aufgabe wird durch die Lehre des die Vorrichtung definierenden Anspruches 1 und mit einem Verfahren mit den Merkmalen des Anspruches 11 gelöst.

Gemäß dieser Lehre wird vorgeschlagen, daß den von dem oder den Siebräumen zum Abfuhrkanal führenden Teilkanälen sogenannte Verdrängerkolben zugeordnet sind. Diese Teilkanäle sind also geradlinig und relativ lang ausgebildet, und in diese Teilkanäle mündet ein Verdrängerkolben, der in der Rückspülstellung das sich in diesem Teilkanal befindende, verschmutzungsfreie Gut der Rückseite des Filterelementes zuführt, und zwar wiederum mit einem Druck, der wesentlich höher liegt als der Druck, der normalerweise auf der Reinsiebseite in der Produktionsstellung des Siebträgers herrscht, wobei ein zusätzlicher Druckerzeuger im Zufuhrkanal für einen konstanten Prozeßdruck sorgt, auch wenn der Verdrängerkolben zurückgezogen wird.

Weiterhin sieht die Erfindung vor, daß der Siebträger so verschoben werden kann, daß die Filterelemente aus den Siebräumen entnommen werden können.

Vorzugsweise schließen an das den Siebträger aufnehmende Gehäuse Anschlußplatten an, wodurch die Verdrängerkolben leichter austauschbar und die Kanäle leichter zu fertigen sind.

Der oder die Verdrängerkolben können hydraulisch, mechanisch, z. B. über Kniehebelsysteme, Zahnstangen usw. beaufschlagt werden.

Im Zufuhrkanal kann ein Strömungsteiler und im Abfuhrkanal ein Strömungslenker untergebracht werden, um damit gute Strömungsverhältnisse zu schaffen.

Der Arbeitsdruck des oder der Verdrängerkolben ist voreinstellbar.

Schließlich schlägt die Erfindung im Anspruch 10 auch ein Verfahren zum Rückspülen bei einer Vorrichtung zum Filtrieren eines Fluids, insbesondere eines verflüssigten Kunststoffes vor, wobei in der Rückspülstellung des Siebträgers über Verdrängerkolben das in der Rückspülstellung stehende Sieb mit einem Druck beaufschlagt wird, der ausschließlich in Richtung des Rückspülstromes wirkt und wesentlich höher als der auf der Produktionsseite des Siebes herrschende Arbeitsdruck sein kann und über einen Druckerzeuger im Zufuhrkanal ein konstanter Prozeßdruck aufrechterhalten werden kann.

Die erfindungsgemäße Vorrichtung und das erfindungsgemäße Verfahren haben den großen Vorteil, daß die Rückspülung unverzüglich erfolgt, sobald eine entsprechende Bedarfsmeldung erfolgt und im angeschlossenen Arbeitsgerät oder Werkzeug ein gleichbleibender Prozeßdruck herrscht.

Ein Ausführungsbeispiel der Erfindung wird nachfolgend anhand der Zeichnungen erläutert. Die Zeichnungen zeigen dabei in
- Fig. 1: eine Vorrichtung mit zwei Verdrängerkolben und in
- Fig. 2: einen Schnitt durch den Siebträger bei einer Vorrichtung gemäß Fig. 1.

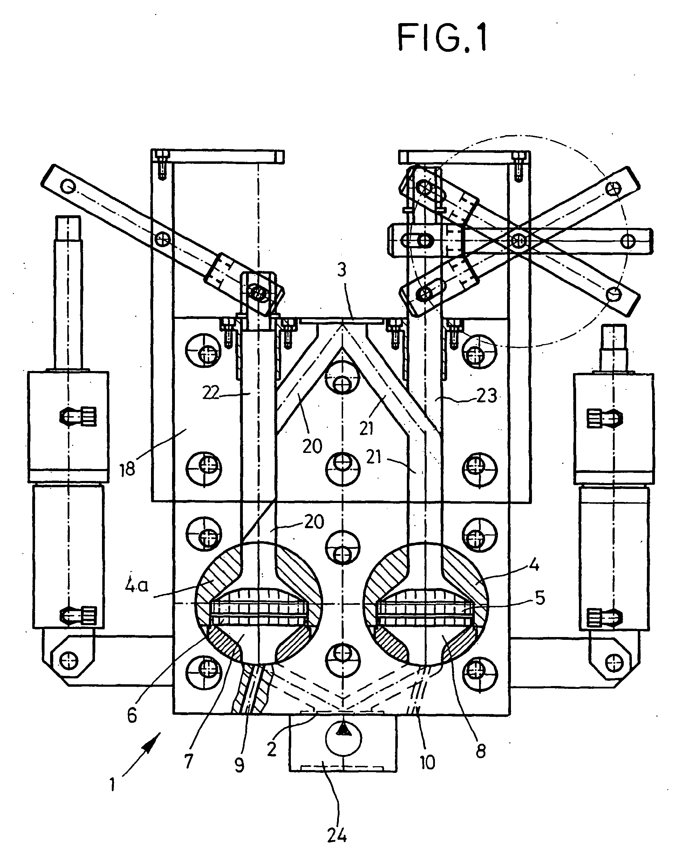

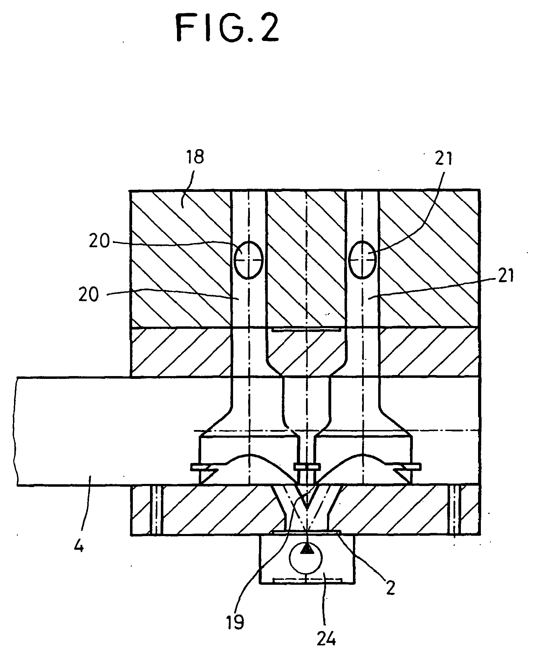

In Fig. 1 und 2 ist ein einen Siebträger 4 aufnehmendes Gehäuse 1 dargestellt, wobei in dem Gehäuse 1 ein Zufuhrkanal 2 und ein Abfuhrkanal 3 angeordnet ist und sich an die stromabwärts gerichtete Seite des Siebträgers 4 eine Anschlußplatte 18 anschließt.

In dem Siebträger 4 sind als Siebe 5, 6 ausgebildete Filterelemente in Siebräumen 7, 8 vorgesehen, wobei darauf hinzuweisen ist, daß der Begriff "Siebträger" in Verbindung mit dem Begriff "Siebe" benutzt wird, wobei aber darauf hinzuweisen ist, daß der Begriff "Sieb" auch für die verschiedenartigsten Siebe, Filter und andere Rückhalteeinrichtungen für Verschmutzungen bezieht.

In dem Zufuhrkanal 2 ist ein Strömungsteiler 19 erkennbar (Fig. 2) und vor dem Zuführkanal 2 ist ein Druckerzeuger 24 angeordnet, z. B. eine Pumpe.

Weiterhin sind in dem Gehäuse 1 Rückspülkanäle 9 und 10 vorgesehen, die zur Atmosphäre münden.

Teilkanäle 20, 21 sind geradlinig ausgebildet und nehmen Verdrängerkolben 22 und 23 auf, die bei der in Fig. 1 dargestellten Anordnung über eine mechanische Stößelvorrichtung betätigt werden können. Bei der Anordnung gemäß Fig. 1 ist eine Anschlußplatte 18 erkennbar, wodurch die Verdrängerkolben 22, 23 bei Schäden od. dgl. leichter ausgetauscht werden können.

Die Fig. 2 zeigt einen Schnitt in Längsachse des Siebträgers 4, und hier sind die Siebe 5 und 6 und die Siebräume 7 und 8 erkennbar, ebenso wie die Teilkanäle 20 und 21.

Zurückkommend auf die Darstellung in Fig. 1 ist erkennbar, daß der Verdrängerkolben 23 in einer Stellung steht, in der das Sieb 5 im Siebträger 4 die Verbindung zwischen dem Zufuhrkanal 2 und dem Abfuhrkanal 3 herstellt, d. h. also die Einrichtung befindet sich in Produktionsstellung.

Der Verdrängerkolben 22 ist demgegenüber aber nach unten gefahren und außerdem steht das im Siebträger 4a befindliche Sieb 6 durch Verschieben des Siebträgers 4a in Verbindung mit dem Rückspülkanal 9, und in dieser Stellung hat der Verdrängerkolben 22 das in dem ihm zugeordneten Teilkanal 20 befindliche Reingut mit einstellbarem, relativ großem Druck auf die Reinsiebseite geführt und damit die Schmutzsiebseite des im Siebträger 4a befindlichen Siebes 6 vom Schmutz befreit.

Bei der Anordnung gemäß Fig. 1 und 2 ist besonders zu beachten, daß die Stirnfläche der Verdrängerkolben 22 bzw. 23 immer vom Material umströmt wird, so daß keine Totzonen entstehen, in denen sich Material abbauen kann.

Der zusätzlich im Bereich des Zufuhrkanales 2 angeordnete Druckerzeuger 24, vorzugsweise eine Pumpe, aber es können auch andere Druckerzeuger eingesetzt werden, bewirkt, daß unabhängig von der Rückspülung, d. h. also unabhängig davon, ob beide Kanäle 20 und 21 im Einsatz sind oder nur ein Kanal, und unabhängig davon, wo der Verdrängerkolben 22 bzw. 23 im Kanal 20 bzw. 21 steht, der Prozeßdruck im Bereich des Abfuhrkanales 3 stets gleich gehalten wird. Dies ist für das an den Abfuhrkanal 3 angeschlossene Arbeitsgerät oder Werkzeug von großer Bedeutung.

## Patentansprüche

1. Vorrichtung zum Filtrieren eines verflüssigten Kunststoffes mit einem Gehäuse (1), einem Zufuhrkanal (2), einem Abfuhrkanal (3) und Rückspülkanälen (9, 10), wobei im Strömungsweg der Kunststoffschmelze in zwei quer zur Strömungsrichtung verschieblich gelagerten Siebträgern (4, 4a) wenigstens je ein Filterelement (5, 6) in einem entsprechenden Siebraum (7, 8) angeordnet und mit dem Zufuhrkanal. (2) und dem Abfuhrkanal (3) in Verbindung bringbar sind sowie einem Verdrängerkolben (22), der, wenn der Siebträger (4) in der Rückspülstellung steht, die Reinsiebseite mit gereinigter Kunststoffschmelze beaufschlagt, **dadurch gekennzeichnet,**
a) **daß** der Verdrängerkolben (22) in einem vom Sieb raum (7) zum Abfuhrkanal (3) führenden Teilkanal (20) einführbar ist, der die verschmutzungsfreie Masse aus dem Teilkanal (20) durch das Filterelement (6) dem zugeordneten Rückspülkanal (9) zuführt, wenn der Siebträger (4) in der Rückspülstellung steht,
b) **daß** mindestens zwei Filterelemente (5, 6) in entsprechenden Siebräumen (7, 8) und mindestens zwei Verdrängerkolben (22,23) vorgesehen sind,
c) **daß** mindestens zwei Teilkanäle (20, 21) und mindestens zwei Rückspülkanäle (9, 10) vorgesehen sind,
d) **daß** im Zufuhrkanal (2) ein Druckerzeuger (24) angeordnet ist, der einen konstanten Prozeßdruck am Abfuhrkanal (3) und dem nachgeschalteten Arbeitsgerät während der Produktionsphase aufrechterhält.

2. Vorrichtung nach Anspruch 1, **dadurch gekennzeichnet, daß** der Druckerzeuger (24) als Pumpe ausgebildet ist.

3. Vorrichtung nach Anspruch 1, **dadurch gekennzeichnet, daß** der Siebträger (4) so verschoben werden kann, daß die Filterelemente (5, 6) aus ihren Siebräumen (7, 8) entnommen werden können.

4. Vorrichtung nach Anspruch 1, **dadurch gekennzeichnet, daß** an dem den Siebträger (4, 4a) aufnehmenden Gehäuse (1) Anschlußplatten (18) angebracht sind.

5. Vorrichtung nach einem oder mehreren der vorhergehenden Ansprüche, **dadurch gekennzeichnet, daß** der oder die Verdrängerkolben (22, 23) hydraulisch betätigbar sind.

6. Vorrichtung nach einem oder mehreren der vorhergehenden Ansprüche 1 bis 4, **dadurch gekennzeichnet, daß** der oder die Verdrängerkolben (22, 23) mechanisch betätigbar sind.

7. Vorrichtung nach einem oder mehreren der vorhergehenden Ansprüche, **dadurch gekennzeichnet, daß** im Zufuhrkanal (2) ein Strömungsteiler vor den beiden Siebräumen (7, 8) angeordnet ist.

8. Vorrichtung nach einem oder mehreren der vorhergehenden Ansprüche, **dadurch gekennzeichnet, daß** im Abfuhrkanal (3) ein Strömungslenker (19) angeordnet ist.

9. Vorrichtung nach Anspruch 1, **dadurch gekennzeichnet, daß** der Arbeitsdruck für die Verdrängerkolben (22, 23) einstellbar ist.

10. Verfahren zum Rückspülen eines verflüssigten Kunststoffes bei einer Vorrichtung mit einem Gehäuse, einem Zufuhrkanal, einem Abfuhrkanal und Rückspülkanälen, wobei im Strömungsweg der Kunststoffschmelze in zwei quer zur Strömungsrichtung verschieblich gelagerten Siebträgem wenigstens je ein Filterelement in einem entsprechenden Siebraum angeordnet und mit dem Zufuhrkanal und dem Abfuhrkanal in Verbindung bringbar sind sowie einem Verdrängerkolben, der, wenn der Siebträger in der Rückspülstellung steht, die Reinsiebseite eines Filterelementes mit gereinigter Kunststoffschmelze beaufschlagt, **dadurch gekennzeichnet, daß** in der Rückspülstellung des Siebträgers ein Verdrängerkolben in einen vom Zufuhrkanal zum Abfuhrkanal führenden Teilkanal eintaucht und die Kunststoffschmelze aus dem Teilkanal durch das in der Rückspülstellung stehende Filterelement drückt, wobei das Filterelement mit einem Druck beaufschlagt wird, der wesentlich höher ist als der auf der Produktionsseite des Filterelementes herrschende Arbeitsdruck und über einen im Zufuhrkanal angeordneten Druckerzeuger am Abfuhrkanal ein konstanter Schmelzedruck aufrechterhalten wird.

11. Verfahren nach Anspruch 10, **dadurch gekennzeichnet, daß** der Rückspüldruck einstellbar ist.

12. Verfahren nach Anspruch 10, **dadurch gekennzeichnet, daß** der durch den Druckerzeuger gelieferte Schmelzedruck in Abhängigkeit eines am Abfuhrkanal gemessenen Druckwertes gesteuert wird.

## Claims

1. Device for filtering a liquid plastic with a housing (1), an inlet duct (2), an outlet duct (3) and reverse-flow ducts (9, 10) where, in the flow path of the plastic melt, at least one filter element (5, 6) in a suitable filter compartment (7, 8) is located in each of two filter carriers (4, 4a) arranged movably at right angles to the direction of flow of the plastic melt, and which can be brought into contact with the inlet duct (2) and the outlet duct (3) and with a displacement piston (22), which, when the filter carrier (4) is in the reverse-flow position, applies cleaned plastic melt to the clean side of the filter, **characterised in**
a) **that** the displacement piston (22) can be introduced into duct section (20) leading from the filter compartment (7) to the outlet duct (3), which feeds the uncontaminated mass from the duct section (20) through the filter element (6) to the appropriate reverse-flow duct (9) when the filter carrier (4) is in the reverse-flow position,
b) **that** at least two filter elements (5, 6) in appropriate filter compartments (7, 8) and at least two displacement pistons (22, 23) are provided,
c) **that** at least two duct sections (20, 21) and at least two reverse-flow ducts (9, 10) are provided,
d) **that** a pressure generator (24) is arranged in the inlet duct (2) and which maintains a constant process pressure on the outlet duct (3) and on the downstream equipment during the production phase.

2. Device according to claim 1, **characterised in that** the pressure generator (24) is in form of a pump.

3. Device according to claim 1, **characterised in that** the filter carrier (4) can be moved in such a way that the filter elements (5, 6) can be removed from their filter compartments (7, 8).

4. Device according to claim 1, **characterised in that** connecting plates (18) are mounted on the housing (1) containing the filter carrier (4, 4a).

5. Device according to one or more of the above claims **characterised in that** the displacement piston or displacement pistons (22, 23) are activated hydraulically.

6. Device according to one or more of the above claims 1 to 4, **characterised in that** the displacement piston or displacement pistons (22, 23) are activated mechanically.

7. Device according to one or more of the above claims **characterised in that** a flow regulator is located in the inlet duct (2) before the two filter compartments (7, 8).

8. Device according to one or more of the above claims **characterised in that** a flow baffle (19) is located in the outlet duct (3).

9. Device according to claim 1, **characterised in that** the operating pressure of the displacement pistons (22, 23) is adjustable.

10. Process for reversing the flow of a liquid plastic with a device with a housing, an inlet duct, an outlet duct and reverse-flow ducts, where, in the flow path of the plastic melt, at least one filter element in a suitable filter compartment is located in each of two filter carriers arranged movably at right angles to the direction of flow of the plastic melt, and which can be brought into contact with the inlet duct and the outlet duct and with a displacement piston, which, when the filter carrier is in the reverse-flow position, applies cleaned plastic melt to the clean side of a filter element, **characterised in that**, in the reverse-flow position of the filter carrier, a displacement piston enters a duct section leading from the inlet to the outlet duct and presses the plastic melt out of the duct section through the filter element in the reverse-flow position, where a pressure is applied to the filter element which is considerably higher than the operating pressure prevailing on the production side of the filter element, and a constant melt pressure is maintained on the outlet duct via a pressure generator located in the inlet duct.

11. Process according to claim 10, **characterised in that** the reverse-flow pressure can be adjusted.

12. Process according to claim 10, **characterised in that** the melt pressure provided by the pressure generator is controlled with reference to a pressure value measured in the outlet duct.

## Revendications

1. Dispositif de filtration d'une matière plastique liquéfiée comprenant un carter (1), un conduit d'amenée (2), un conduit d'évacuation (3) et des conduits de rinçage en sens inverse (9, 10), sachant qu'est disposé - dans deux porte-tamis (4, 4a) montés sur l'itinéraire du flux du bain de plastique, sur des paliers permettant leur déplacement transversalement au sens dudit flux - au moins un élément filtrant (5, 6) chacun dans un compartiment de tamisage (7, 8) correspondant et qu'il est possible d'amener ces éléments filtrants en liaison avec le conduit d'amenée (2) et le conduit d'évacuation (3) et comprenant un piston (22) de refoulement lequel, lorsque le porte-tamis (4) se trouve en position de rinçage inverse, met sous pression le côté propre du tamis contenant le bain de plastique purifié, **caractérisé en ce que**
a) le piston de refoulement (22) est introductible dans un conduit partiel (20) allant du compartiment de tamisage (7) au conduit d'évacuation (3), conduit (20) au sortir duquel la pâte exempte d'impuretés traverse l'élément filtrant (6) et accède au conduit afférent (9) de rinçage en sens inverse lorsque le porte-tamis (4) se trouve en position de rinçage en sens inverse,
b) sont prévus, dans des compartiments de tamisage (7, 8) correspondants, au moins deux éléments filtrants (5, 6) et au moins deux pistons de refoulement (22, 23),
c) sont prévus au moins deux canaux partiels (20, 21) et au moins deux canaux de rinçage en sens inverse (9, 10),
d) dans le conduit d'amenée (2) est disposé un générateur de pression (24) entretenant une pression processuelle constante au niveau du conduit d'évacuation (3) et de l'appareil de travail en aval pendant la phase de production.

2. Dispositif selon la revendication 1, **caractérisé en ce que** le générateur de pression (24) est configuré en pompe.

3. Dispositif selon la revendication 1, **caractérisé en ce que** le porte-tamis (4) est déplaçable de manière qu'il soit possible d'extraire les éléments filtrants (5, 6) hors de leurs compartiments de tamisage (7,8)

4. Dispositif selon la revendication 1, **caractérisé en ce que** des plaques de raccordement (18) ont été fixées contre le carter (1) recevant le porte-tamis (4, 4a).

5. Dispositif selon l'une ou plusieurs des revendications précédentes, **caractérisé en ce que** le ou les piston(s) de refoulement (22, 23) peu(ven)t être actionné(s) hydrauliquement.

6. Dispositif selon l'une ou plusieurs des revendications précédentes 1 à 4, **caractérisé en ce que,** le ou les piston(s) de refoulement (22, 23) est/sont actionnable(s) mécaniquement.

7. Dispositif selon l'une ou plusieurs des revendications précédentes, **caractérisé en ce que** dans le conduit d'amenée (2) est disposé un variateur de flux en amont des deux compartiments de tamisage (7,8).

8. Dispositif selon l'une ou plusieurs des revendications précédentes, **caractérisé en ce que** dans le conduit d'évacuation (3) est disposé un dispositif de guidage du flux (19).

9. Dispositif selon la revendication 1, **caractérisé en ce que** la pression de travail afférente aux pistons de refoulement (22, 23) est réglable.

10. Procédé de rinçage en sens inverse d'une matière plastique liquéfiée dans un dispositif comprenant un carter, un conduit d'amenée, un conduit d'évacuation et des conduits de rinçage en sens inverse, sachant que sur l'itinéraire du flux du bain de plastique, dans deux porte-tamis montés sur paliers permettant un déplacement transversalement à la direction du flux, est disposé au moins un élément filtrant chacun dans un compartiment de tamisage correspondant, et que ces éléments filtrants sont reliables au conduit d'amenée et au conduit d'évacuation, ainsi que comprenant un piston de refoulement lequel, lorsque le porte-tamis se trouve en position de rinçage inverse, met le côté tamis propre d'un élément filtrant sous pression avec le bain de matière plastique purifié, **caractérisé en ce que** dans le conduit de rinçage en sens inverse du porte-tamis un piston de refoulement plonge dans un conduit partiel reliant le conduit d'amenée et le conduit d'évacuation, et chasse le bain de matière plastique hors de ce conduit partiel pour le forcer à traverser l'élément filtrant situé dans le conduit de rinçage en sens inverse, sachant que l'élément filtrant est mis sous une pression radicalement plus élevée que la pression de travail régnant sur le côté production de l'élément filtrant et sachant que via un générateur de pression disposé dans le conduit d'amenée le bain est maintenu à une pression constante au niveau du conduit d'évacuation.

11. Procédé selon la revendication 10, **caractérisé en ce que** la pression de rinçage en sens inverse est réglable.

12. Procédé selon la revendication 10, **caractérisé en ce que** la pression du bain développée par le générateur de pression est pilotée en fonction d'une valeur de pression mesurée au niveau du conduit d'évacuation.
